# DEMANDE DE BREVET EUROPEEN

(11) **EP 1 234 534 A1**
(43) Date de publication de la demande: **28.08.2002**
(21) Numéro de dépôt: 02364006.3
(22) Date de dépôt: 08.02.2002
(51) Int. Cl.: A47J 36/02, B65D 81/34

(54) **Appareil pour faire des pop-corn dans un four micro-onde**

(30) Priorité: 26.02.2001 FR 0102544
(71) Demandeur: Wahab, Abdul Matin, 14200 Herouville St Clair (FR)
(72) Inventeur: Wahab, Abdul Matin, 14200 Herouville St Clair (FR)

(57) **Abrégé**

L ' invention concerne un appareil permettant de faire des pop-corn dans un four micro-onde en moins de deux minutes qui est nommé « appareil pour faire des pop-corn dans un micro-onde ».

Il est constitué d'un récipient (1), d'une partie creuse (2) dans lequel se mettent les maïs.
Les languettes (4) servent à freiner une partie des pop-corn déjà éclataient pour qu'ils ne redescendent dans la partie creuse (2).
La tige (3) permet au maïs de ne pas être exposé sous les ondes centrales du micro-onde.
Dans le couvercle (7) les enfoncements (8) avec les trous (9) permettent d'avoir une aération mais aussi de visser et dévisser le couvercle dans la partie (6) de la tige (3) en gardant une distance entre le récipient et le couvercle, pour une autre aération.

L'appareil selon l'invention est particulièrement destiné à faire des pop-corn dans un micro-onde.

## Description

La présente invention concerne un récipient pour faire des pop-corn dans un four micro-onde .

Il comporte en effet selon une première caractéristique, un récipient (1) présentant un fond creux dans lequel on met les grains de maïs.
Les languettes (4) sur les côtés freinent une partie des maïs déjà éclataient pour ne pas qu'ils redescendent dans la partie creuse (2) qui est réservée aux maïs .
Au centre de cet appareil se trouve une tige qui empêche les pop-corn de se trouvaient totalement sous les ondes centrales du micro-onde .
Cette tige sera de forme cylindrique .
Le couvercle (7) dispose au sommet des enfoncements et des petits trous pour l'aération. Au centre de ce couvercle se trouve l'embranchement de la tige formé en deux parties de diamètres différents. Lorsqu'on ferme le récipient la partie (11) du couvercle se visse dans la tige (3) en laissant un espace de deux millimètres entre le récipient et le couvercle ainsi le récipient n'est pas totalement fermé pour laisser une aération . Avec ceci il y aura une mesurette (12) pour donner la bonne dose de maïs convenue au récipient. (Soit environ 40 grammes .)

Le dessin annexe illustre l'invention :

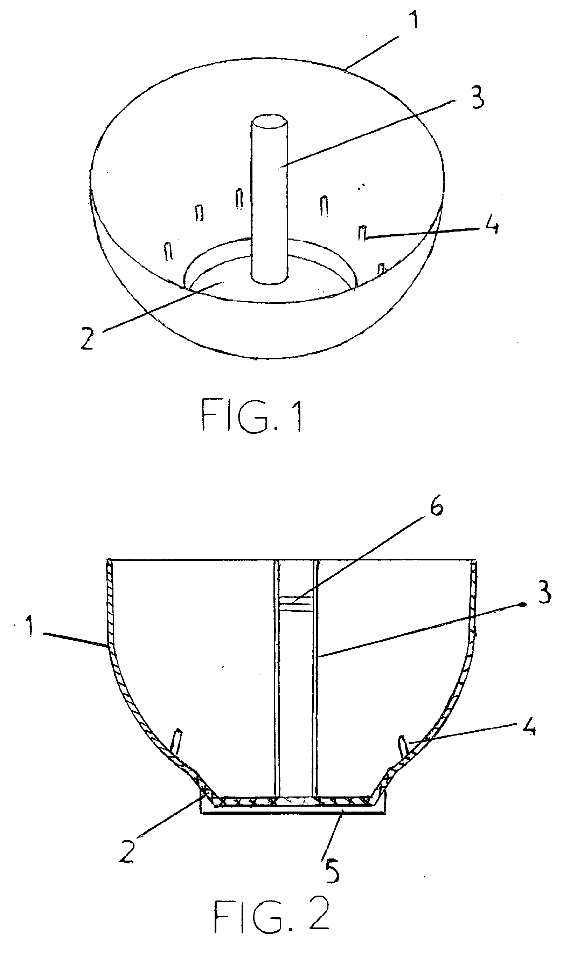

La figure 1 représente le récipient de l ' invention vue de haut.
La figure 2 représente en coupe, le récipient de l'invention.
La figure 3 représente en coupe, le couvercle de l'invention.
La figure 4 représente la mesurette .

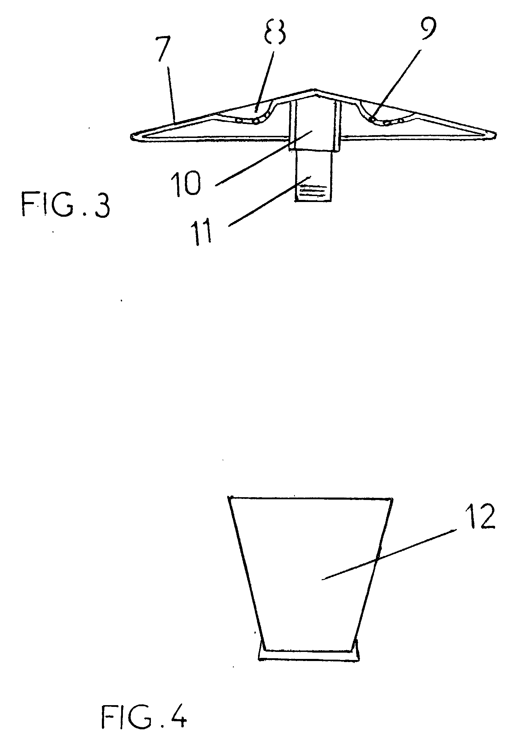

En référence à ces dessins l'appareil comporte un récipient (1) d'un diamètre de 17 centimètres et d ' une épaisseur de 1, 5 millimètres, un fond creux (2) d ' un diamètre de 7, 5 à 9 centimètres, une profondeur de 1, 5 centimètres et d ' une épaisseur de 3 millimètres qui fait un angle de 125 degrés avec le fond de la partie creuse.
Des languettes (4) tout autour du récipient, avec une distance de 2 centimètres entre chacune, d ' une longueur de 1 centimètre, d' une largeur de 3 millimètres et d ' une épaisseur de 2 millimètres qui forme un angle de 120 degrés avec le récipient côté de la partie creuse.
La tige (3) sera disposée au centre, elle aura la même hauteur que l'appareil soit 11, 5 centimètres et d ' un diamètre de 1,5 centimètres .
Le couvercle (7) présenté à la verticale est triangulaire d ' une hauteur de 1, 3 centimètres et d'un diamètre de 17 centimètres-.
Il contiendra 4 enfoncements d'une profondeur de 6 millimètres, une longueur de 4 centimètres et une largeur de 2 centimètres au centre, tout cela avec 3 trous chacuns .
Dans le couvercle la tige (10) aura une hauteur de 1, 5 centimètres, la tige (11) aura une hauteur de 1,5 centimètres, et 1 centimètre de diamètre, qui se vissera dans la tige (3) et qui laissera un espace de 2 millimètres entre le couvercle et le récipient.
Le support (5) possède une hauteur de 2 millimètres en dessous de l'appareil.
La mesurette (12) servira à donner la bonne dose de maïs convenue . Comme sur la figure 4 la mesurette (12) aura des dimensions de l'ordre de 4, 5 centimètres pour le diamètre du haut, et de 2,5 centimètres pour le diamètre du bas, le tout avec une hauteur de 4, 5 centimètres .

Le dispositif sera en polypropylène, une matière qui résiste à la chaleur du micro-onde.

Le dispositif selon l'invention est particulièrement destiné à la fabrication du pop-corn au micro-onde .

(Pour faire les pop-corn on mettra environ 40 grammes de maïs, soit la dose de la mesurette, dans le récipient, on le placera dans le micro-onde à une puissance entre 750 et 800 watts pour une durée de une minute trente à une minute cinquante.)

## Revendications

1. Appareil pour faire des pop-corn dans un four micro-onde **caractérisé en ce qu** ' il comporte : un récipient (1) présentant une partie creuse ( 2) dans laquelle on met les maïs, les languettes (4) constituent une partie du récipient (1) une zone pour freiner une partie des pop-corn déjà éclataient à redescendre dans la partie creuse (2) du récipient (1), la tige (3) qui protège les pop-corn d'être exposé au forte ondes centrales du micro-onde, le couvercle ( 7 ), les enfoncements ( 8 ) avec les trous ( 9 ) d ' aération ; l'embranchement partie (10) et (11) du couvercle, la mesurette (12) pour donner la bonne dose de maïs convenue au récipient, soit 40 grammes .

2. Appareil selon la revendication 1 **caractérise en ce que** la partie creuse (2) avec un diamètre de 7,5 à 9 centimètres, soit plus épaisse par rapport au récipient (1) qui est réservé pour les grains de maïs .

3. Appareil selon la revendication 1 **caractérise en ce que** le couvercle (7) après la fermeture laisse une distance de 2 millimètres entre le couvercle (7) et le récipient (1) pour l ' aération.
